(19) Europäisches Patentamt

European Patent Office

Office européen des brevets

(11) **EP 1 340 609 B1**

(12) **EUROPEAN PATENT SPECIFICATION**

(45) Date of publication and mention
of the grant of the patent:
**31.08.2005 Bulletin 2005/35**

(51) Int Cl.⁷: **B29C 61/00**, B29C 55/00,
G09F 3/00, C08J 5/18
// B29K67:00

(21) Application number: **03003026.6**

(22) Date of filing: **12.02.2003**

(54) **Heat-shrinkable polyester films and labels**

Wärmeschrumpfbare Polyesterfolien und Etiketten

Feuilles et étiquettes thermorétractables en polyester

(84) Designated Contracting States:
**AT BE BG CH CY CZ DE DK EE ES FI FR GB GR
HU IE IT LI LU MC NL PT SE SI SK TR**

(30) Priority: **14.02.2002 JP 2002037313
07.10.2002 JP 2002293630**

(43) Date of publication of application:
**03.09.2003 Bulletin 2003/36**

(73) Proprietor: **Toyo Boseki Kabushiki Kaisha
Osaka 530-8230 (JP)**

(72) Inventors:
• **Ito, Hideki, c/o Toyo Boseki K. K.
Oaza Kottsu, Inuyama-shi, Aichi 484-8508 (JP)**
• **Tabota, Norimi, c/o Toyo Boseki K. K.
Oaza Kottsu, Inuyama-shi, Aichi 484-8508 (JP)**
• **Nagano, Hiroshi, c/o Toyo Boseki K. K.
Oaza Kottsu, Inuyama-shi, Aichi 484-8508 (JP)**

(74) Representative: **Weber, Thomas et al
Patentanwälte von Kreisler-Selting-Werner,
Deichmannhaus am Dom,
Bahnhofsvorplatz 1
50667 Köln (DE)**

(56) References cited:
**EP-A- 0 688 814**

• **PATENT ABSTRACTS OF JAPAN vol. 2000, no.
10, 17 November 2000 (2000-11-17) & JP 2000
202972 A (TOYOBO CO LTD), 25 July 2000
(2000-07-25)**
• **PATENT ABSTRACTS OF JAPAN vol. 014, no.
456 (C-0765), 2 October 1990 (1990-10-02) & JP
02 180933 A (TEIJIN LTD), 13 July 1990
(1990-07-13)**

**Description**

BACKGROUND OF THE INVENTION

FIELD OF THE INVENTION

The present invention relates to a polyester film, and in particular to a polyester film having an appearance like Washi paper (traditional Japanese paper) for use as a label. More specifically, the present invention related to a heat-shrinkable polyester film having an appearance like Washi paper and almost free from crinkling, shrinkage shading, and deformation thereof due to heat shrinkage.

DESCRIPTION OF THE RELATED ART

Films made of polyvinyl chloride, polystyrene, and the like have been mainly used as heat-shrinkable films, especially as heat-shrinkable films for labels used for shrink-wrapping of bottles. However, the polyvinyl chloride films have a disadvantage in emission of harmful chlorinated gases when incinerated, while the polystyrene films have disadvantages of their own including a poor solvent resistance and a poor printability. Further, for efficient recovery and recycle of PET (Polyethylene terephthalate) bottles, labels made of polymer resins different form PET such as polyvinyl chloride and polyethylene should be separated in advance from the PET bottles. For that reason, polyester heat-shrinkable films have been attracting attention since the polyester films do not have these problems.

It is especially desirable to add a new function to the polyester heat-shrinkable labels for shrink-wrapping of PET bottles, and one of such new functions is the appearance of Washi paper. Washi paper (traditional Japanese paper) is a paper prepared mainly from inner barks of plants such as kozo, gampi and mitsumata, and most of the paper is handmade. Washi paper has good ink absorbency, strength, soft translucency, flexibility, and in particular its excellent warm appearance. That Washi paper has a relatively coarse surface with long wood pulps overlaid which is evident in its appearance and has variations in paper thickness. Washi papers have mainly been used as papers for printing, artistic paperwork, lighting, and bookbinding.

To provide the Washi-like appearance, special coating of film, for example, coating with cellulosic fibers, may be possible, but it is usually very difficult to overlay fibers or pulps evenly on the film, and consequently the durability of the coated film is not so high.

Alternatively, a film containing numerous voids produced by blending a non-miscible resin or inorganic particles may also be used for that purpose, but the presence of voids in the film only provides a film with a light blocking or concealing property, and the surface thereof is rather smooth and does no give an appearance like Washi paper.

For example, Japanese Unexamined Patent Publication No. 2-16130 discloses a microvoid-containing polyester film containing crystalline polypropylene at an amount of 3 to 40 weight %, but the film is intended to be used as a material for white boards and the like, and the surface thereof is relatively smooth and does not give a Washi paper-like appearance.

Additionally, Japanese Unexamined Patent Publication No. 63-193822 discloses a microvoid-containing heat-shrinkable polyester film containing a polyolefin polymer at an amount of 2 to 30wt %, and the film has an appearance, for example, like tracing paper and not like Washi paper.

Alternatively, Japanese Unexamined Patent Publication No. 63-235338 discloses a white-colored void-containing polyethylene terephthalate film containing white inorganic particles at an amount of 5 to 30 wt % and having a void content of 5 to 30 %, but the film is for use as a material for telephone cards and the like, and the surface of the film is relatively smooth and does not have an appearance like Washi paper.

A film having a Washi-like pattern that contains a non-miscible resin and inorganic particles was disclosed in Japanese Unexamined Patent Publication No. 2-180933, but the film is intended primarily for use as writing pads or papers and does not have an appearance similar to Washi paper.

As described above, conventional polyester films or heat-shrinkable polyester films could not meet the requirements for the label having an appearance like Washi paper.

The present invention has been conducted to solve the problems described above, and an object thereof is to provide a heat-shrinkable polyester film for use as a label for shrink-wrapping of bottles that has an appearance like Washi paper and is almost free from crinkling, shrinkage shading, and deformation thereof due to heat shrinkage.

SUMMARY OF THE INVENTION

In order to attain the aforementioned object, a heat-shrinkable polyester film of the present invention is characteristic in that the film has a variation in film thickness of 3 $\mu$m or more per cm both in a maximum shrinkage direction and a direction orthogonal to the maximum shrinkage direction; and comprises a layer having voids with an average void diameter of 15 μm or more in vicinity of a center part in a film thickness direction and at least one surface layer having voids with an average void diameter of less than 5 μm.

The heat-shrinkable polyester film of the present invention having the structure described above is a polyester film having a surface with an appearance like Washi paper, suitable for use as a label for shrink-wrapping of bottles, and almost free from crinkling, shrinkage shading, and deformation due to shrinkage.

The variation in film thickness per cm both in the maximum shrinkage direction or the direction orthogonal thereto is determined as follows. Thickness of a film sample is measured at several sites along the maximum shrinkage direction and the direction orthogonal thereto, respectively, and a difference between the maximum and minimum values in thickness per 1 cm portion of the film is calculated, and an average of the differences thus obtained is designated as the variation in film thickness.

DESCRIPTION OF THE PREFERRED EMBODIMENTS

Hereinafter, preferred embodiments of the present invention will be described in detail.

Examples of dicarboxylic acid components of the polyester to be used in the present invention include aromatic dicarboxylic acids such as terephthalic acid, isophthalic acid, naphthalene dicarboxylic acid, and orthophthalic acid; aliphatic dicarboxylic acids such as adipic acid, azelaic acid, sebacic acid, and decane dicarboxylic acid; alicyclic dicarboxylic acids, and the like.

The content of the aliphatic dicarboxylic acid (e.g., adipic acid, sebacic acid, decane dicarboxylic acid, etc.) is preferably less than 3 mole % with respect to the sum of dicarboxylic acid components.

The polyester containing these aliphatic dicarboxylic acids at an amount of 3 mole % or more leads to a heat-shrinkable polyester film with a rigidity not high enough for high speed-loading of the resulting labels around bottles.

The polyester preferably contains no tri- or more polybasic carboxylic acid (e.g., trimellitic acid, pyromellitic acid and anhydrides thereof). The polyester containing one of these polybasic carboxylic acids leads to a heat-shrinkable polyester that does not attain the high shrinkage percentage.

Examples of diol components of the polyester to be used in the present invention include aliphatic diols such as ethylene glycol, propanediol, butanediol, neopentyl glycol, and hexanediol; alicyclic diols such as 1,4-cyclohexane dimethanol; aromatic diols; and the like.

The polyester to be used for the heat-shrinkable polyester film of the present invention is preferably a polyester having a glass transition temperature (Tg) adjusted to a range of 60 to 75°C, for example, by using at least one diol selected from diols having 3 to 6 carbons (e.g., propanediol, butanediol, neopentyl glycol, hexanediol, etc.) as a diol component.

To produce a heat-shrinkable polyester film particularly excellent in the heat shrinkage property of the final product, i.e., label (hereinafter, referred to as label heat shrinkage property), the polyester may preferably have an amorphous (non-crystalline state ) portion therein, and thus preferably uses an amorphous monomer diol component (e.g., neopentyl glycol, etc.) as a diol component.

The content of the amorphous monomer diol component in all diol components is preferably 17 mole % or more, more preferably 20 mole % or more. The presence of the amorphous monomer diol component at an amount of less than 17 mole % with respect to all diol components often makes it difficult to bond a flat film at both ends, by the use of a non-halogenated organic solvent (e.g., 1,3-dioxolane, etc.) as an adhesive, into a tubular film for use as, for example, a label for bottles, and thus is unfavorable. The amorphous monomer diol component above is a diol that can, when copolymerized to the polyester, provide the resulting polyester with an amorphous portion, such as neopentyl glycol and 1,4-cyclohexane dimethanol

Diols having 8 or more carbons (e.g., octanediol, etc.), or tri- or more polyhydric alcohols (e.g., trimethyrolpropane, trimethylolethane, glycerol, diglycerol, etc.) are preferably not included as the diol component in the polyester. The heat-shrinkable polyester film obtained by using one of these diols or polyhydric alcohols does not have a high shrinkage percentage desirable.

It is also preferable that diethylene glycol, triethylene glycol, or polyethylene glycol is not included in the polyester as a diol component. Although diethylene glycol tends to present in the polyester as it is a byproduct generated during polyester polymerization, the content of diethylene glycol is preferable controlled to be less than 4 mole %.

When two or more polyesters are mixed and used, the content of an acid component or a diol component of the polyesters to be employed in the present invention is the content with respect to the sum of all acid components or of all diol components of these polyesters. Therefore, the contents thereof do not depend on whether these polyesters undergo ester exchange reactions or not during processing.

In order to provide a heat-shrinkable polyester film of the present invention with a good sliding property, an inorganic lubricant such as titanium dioxide, fine particle silica, kaolin, or calcium carbonate, or an organic lubricant such as a long-chain fatty acid ester may be added to the polyester. Additionally, additives such as stabilizers, coloring agents, antioxidants, antifoaming agents, antistatic agents, and UV absorbents may also be added.

The polyesters described above can be prepared according to the conventional polymerization methods known in the art. The polyesters can be prepared by the direct polymerization method, i.e., a direct reaction of a dicarboxylic acid and a glycol, or by the ester exchange method, i.e., a reaction of a dicarboxylic acid dimethylester and a glycol. The polymerization may be conducted either in a batchwise or continuous process.

The heat-shrinkable polyester film of the present invention has variations in film thickness of 3 μm or more per cm in the maximum shrinkage direction and in the direction orthogonal to the maximum shrinkage direction, preferably 5 μm or more.

The heat-shrinkable polyester film of the present invention contains certain voids therein, and for that reason provides an appearance like Washi paper.

The heat-shrinkable polyester film of the present invention has at least one surface layer of the film containing voids having an average void diameter of less than 5 μm, preferably less than 4 μm, most preferably less than 3 μm. The surface layer of the film is typically a portion of the film from the surface to a depth of 10 μm therefrom in the film thickness direction.

Alternatively, the heat-shrinkable polyester film of the present invention has a layer (internal layer) containing voids having an average void diameter of 15 μm or more, preferably 18 μm or more, in an amount preferably of 60 to 80 %, further more preferably of 70 to 80 % in vicinity of a center part in the film thickness direction. The internal layer of the film is an internal portion of the film not shallower than 10 μm from the surface thereof in the film thickness direction. The average diameter of the voids in the internal layer in the film thickness direction is 15 μm or more, preferably 18 μm or more, and the upper limit thereof is not particularly limited, but usually not more than 50 μm, preferably not more than about 40 μm.

By blending to the polyester and a certain thermoplastic resin not miscible, mixing resultant mixture, and coextruding the mixture, and by subsequent drawing of the resulting cast film, numerous voids are formed in the film, and these voids seem to be the reason for the appearance like Washi paper.

Though still an assumption, it is likely that by blending the polyester and a certain thermoplastic resin not miscible therewith, and by mixing and coextruding in a certain condition, the resulting film acquires voids larger than those of the conventional void-containing polyester film. The voids suppress light scattering and provide a coarser and more irregular surface due to local variations in the void diameter. Thus the films is provided with the appearance like Washi paper

Examples of the certain thermoplastic resin not miscible with the polyester above include polymethylpentene resin, ionomer resin, polyester resin, polypropylene resin, and so on.

The amount of the thermoplastic resin not miscible with the polyester above is preferably 11 weight % or more, more preferably 13 weight % or more with respect to the sum of all resins in the void-containing layer. With a thermoplastic resin of less than 11 weight %, the amount of the voids in the film is insufficient and thus do not provide a label with the appearance like Washi paper. The amount of the thermoplastic resin not miscible with the polyester is at most about 20 weight % with respect to the sum of the void-containing layer.

The heat-shrinkable polyester film of the present invention is usually produced by the steps of supplying a polyester resin and a thermoplastic resin not miscible therewith into a melt-extrusion equipment and of subsequent casting of the molten resins into a film. The molten resins may be cast into a single-layered film, or into a multi-layered film containing 2, 3, or more layers. A layer containing a polyester and a thermoplastic resin not miscible therewith (hereinafter, occasionally referred to simply as A layer) may be formed by multilayer coextrusion on at least one surface of another layer containing a polyester and a thermoplastic resin not miscible therewith at a different composition (hereinafter, occasionally referred to simply as B layer), providing a multi-layered film having a structure of A/B or A/B/A. When the heat-shrinkable polyester film thus obtained is a two-layered film having a structure of A/B, the thickness ratio of A to B layer (A/B) is preferably in the range of 50/50 to 20/80. Alternatively, when the film has a three-layered structure of A/B/A, the thickness ratio of A to B layer (A/B/A) is preferably in the range of 20/60/20 to 40/20/40.

For the purpose of providing the appearance like paper, it is effective, for example, to laminate a heat-shrinkable polyester film of the present invention with another heat-shrinkable film (e.g., heat-shrinkable polyester films such as heat-shrinkable polyethylene terephthalate films heat-shrinkable polyethylene -2,6-naphthalate film, heat-shrinkable polyolefin films such as heat-shrinkable polypropylene film, and the like), forming a multi-layered film that has the void-containing layer on at least one surface of another heat-shrinkable film. The void-containing layer preferably contains at least one certain thermoplastic resin not miscible with the polyester above. The thickness of this void-containing layer is preferably μm or more. When the thickness of the void-containing layer is less than 40μm, the resulting film is inferior in opacifying property and does not have the appearance like Washi paper.

Variations in film thickness are preferably 3μm or more per cm, more preferably 5μm or more per cm, both in the maximum shrinkage direction and the direction orthogonal to the maximum shrinkage direction. When the thickness variation is less than 3μm, the resulting film does not have the appearance like Washi paper and is unfavorable.

Thickness of the heat-shrinkable polyester film of the present invention is not particularly limited. But when the film is used as a heat-shrinkable film for labels, the preferable thickness of the film is in the range of 40 to 200 μm,

more preferably of 50 to 100 μm. If the heat-shrinkable polyester film of the present invention is a multi-layered film, the thickness of the void-containing layer is preferably 40 μm or more.

The heat-shrinkable polyester film of the present invention preferably shows an excellent solvent bonding property by the use of one of non-halogenated organic solvents. The non-halogenated organic solvents include aromatic hydrocarbons such as benzene, toluene, xylene, trimethyl benzene, etc., phenols such as phenol, furans such as tetrahydrofuran, oxolanes such as 1,3-dioxolane, and the like. Typically, the solvent bonding property by the use of the non-halogenated organic solvent can be expressed by a peeling strength of a film sample bonded with 1,3-dioxolane at the both ends thereof overlapped. The use of 1,3-dioxolane is particularly favorable from the viewpoint of safety as well.

The heat-shrinkable polyester film of the present invention preferably has a heat shrinkage percentage of 30 % or more, more preferably 35 % or more, in the maximum shrinkage direction. The heat shrinkage percentage in the maximum shrinkage direction is a value determined by immersing a 10cm × 10 cm sample in hot water at 85°C ±0.5°C for 10 seconds under no load to induce heat shrinkage, immersing immediately in water at 25°C ±0.5°C for 10 seconds, measuring length of the sample in the maximum shrinkage direction, and by calculating according to the following equation.

$$\text{Heat shrinkage percentage} = \{(\text{Length before shrinkage-Length after shrinkage})/\text{Length before shrinkage}\} \times 100\ (\%)$$

When the heat shrinkage percentage in the maximum shrinkage direction after treatment at 85°C for 10 seconds is less than 30 %, the film often leads to problems of insufficient shrinkage when used as a label.

Alternatively, the heat shrinkage percentage in the direction orthogonal to the maximum shrinkage direction is preferable 10 % or less, more preferably of no more than 6 %. When the heat shrinkage percentage in the direction orthogonal to the maximum shrinkage direction is over 10 %, the film tends to give a larger deviation in the vertical length of the labels and is thus unfavorable.

Hereinafter, the typical methods of producing a heat-shrinkable polyester film of the present invention will be described in detail, but the method of the present invention is not restricted thereto.

Chips of a polyester resin to be used in the present invention are dried in an ordinary drier such as a hopper drier and a paddle drier, or in a vacuum dryer, and melted at 200 to 300°C and extruded in a molten state into a film. Any conventional methods known in the art such as the T die method and the tubular method may be used for the melt-extrusion. After melt-extrusion, the cast film is rapidly chilled to yield an undrawn film.

Successively, the undrawn film thus obtained is drawn 3.0 times or more, preferably 3.5 times or more in the traverse direction. The drawn film is then, if desired, heat-treated at a temperature of 70 to 100°C. The heat-shrinkable polyester film is obtained. The film may further be redrawn in the traverse direction if desired.

A film having the appearance like Washi paper can be obtained in a more continuous and stable manner especially when the film casting is conducted in the following condition.

Chips of a polyester resin to be used in the present invention and chips of a thermoplastic resin not miscible therewith are preferably mixed as immediately ahead of an extruder as possible. Mixing of these resins immediately before the extruder enables to prevent uneven supply of the thermoplastic and the polyester resins, and thus to produce a film with the appearance in a more stabilized manner.

Extrusion temperature of the resins is preferably 260°C to 300°C. With an extrusion resin temperature of less than 260°C, the voids formed by the thermoplastic resin not miscible with the polyester become relatively smaller, and consequently the resulting film tends to have an appearance less like Washi paper. Alternatively, with an extrusion resin temperature of no lower than 300°C, the thermoplastic resin tends to be not well dispersed in the extruder, and as a result, cannot provide a film with a favorable appearance, or makes film-casting difficult and unstable.

Examples of the casting method above were explained as the heat-shrinkable film has the maximum shrinkage direction in the traverse direction (orthogonal to machine direction) because it is more practical to attain the object of the invention when the maximum shrinkage direction is identical to the traverse direction, but a film having the maximum shrinkage direction in the machine direction can also be produced in a similar manner to the method described above except that the direction of stretching is altered by an angle of 90 degrees.

EXAMPLE

Hereinafter, the present invention will be described in more detail with reference to EXAMPLES, but it should be understood that the present invention is not restricted to these EXAMPLES.

Properties of the film of the present invention were determined according to the following procedures.

(1) Heat shrinkage percentage

A film was cut into a square sample of 10 cm × 10 cm. The sample was immersed and shrank in hot water at a predetermined temperature for a predetermined period under no load, and was immersed in cold water immediately for a predetermined period under no load. Subsequently, lengths of the sample in the vertical and traverse directions were measured and the heat shrinkage percentage was calculated according to the following equation (1). The direction having a larger value in the heat shrinkage percentage was designated as the maximum shrinkage direction.

$$\text{Heat shrinkage percentage} = \{(\text{Length before shrinkage} - \text{Length after shrinkage})/\text{Length before shrinkage}\} \times 100\ (\%) \tag{1}$$

Here, a heat shrinkage percentage determined when the temperature of hot water is 85±0.5°C, the temperature of cold water is 25 ± 0.5°C, and the period of immersion is 10 seconds, was designated as the heat shrinkage percentage.

(2) Product appearance after heat shrinkage

A surface of a heat-shrinkable film sample was printed in advance with three color inks, dark green, gold, and white, manufactured by Toyo Ink Mfg., and the printed film was bonded at the both ends by a heat sealer to give a circular label having the printed surface exposed outward with a length when folded of 10.8 cm and a height of 6.1 cm. Subsequently, the tubular label was placed around a bottle and the product appearance after heat shrinkage was evaluated according to a procedure of Test 1 or 2 below.

Test 1. 500 mL PET bottle (height: 20.6cm, diameter at a middle portion of the bottle: 6.5cm; a bottle manufactured by Yoshino Kogyo and used as a container for black tea of Kirin Beverage) wrapped with a label sample was heated in a steam tunnel manufactured by Fuji Astec Inc., (Type : SH-1500-L) in a condition of a staying time in the tunnel of 2.5 seconds and a zone temperature of 85°C (number of samples=20).

Test 2. 500 mL PET bottle (height: 20.6cm, diameter at a middle of the bottle: 6.5cm; a bottle manufactured by Toyo Seikan Kaisha, and used as a container for green tea of Asahi Soft Drinks) wrapped with a label sample was heated in a steam tunnel manufactured by Fuji Astec Inc., (Type : SH-1500-L) in a condition of a staying time in the tunnel of 2.5 seconds and a zone temperature of 85°C (number of samples=20).

The product appearance after heat shrinkage was determined by visual examination, and classified according to the following standard.

○: Absence of either crinkling, upward displacement, or insufficient shrinkage
×: Presence of either crinkling, upward displacement, or insufficient shrinkage

(3) Variation in film thickness

10 rectangular film samples of 5 cm/50 cm (in the vertical/traverse direction) and 10 samples of 50 cm/5 cm (same as above) were prepared, and the thickness of each of the film samples(number of samples=20) is measured along the lengthwise direction by means of a contact thickness meter of Anritsu Corp., (Type : KG60/A). From the chart thus obtained, the maximum and minimum values were collected from each of 1 cm portions of the film, and an average of the differences between the maximum and minimum values for each portion of the film sample were calculated and designated as the variation in film thickness.

(4) Diameter of voids

A film sample was cut with a microtome into a smooth-surfaced sample for observation, which was then vapor deposited with platinum by Ion Sputter (E-1030 manufactured by Hitachi) over a period of 150 seconds. A cross-sectional photograph of the platinum deposited sample in the thickness direction was taken by the use of a field emission scanning electron microscope (S-800 manufactured by Hitachi), and enlarged 2000 times. Diameter of the voids not smaller than 0.5 μm dimension (diameter) was measured in a portion of the film, thickness of the sample (vertical)×54 μm (horizontal). An average of the diameters thus determined was designated as the average void diameter of the sample. The diameter of void is a length of the void in the cross-sectional photo in the direction parallel to the surface of the film sample.

(5) Apparent specific gravity

A film was accurately cut into a square sample of 5.00 cm×5.00 cm, and the thickness thereof was determined at 50 different sites and the average of the values was designated as the average thickness (t μm). The film was accurately weighed to the order of 0.1 mg (*w* g), and the apparent specific gravity of the film sample is calculated according to equation 2 below.

$$\text{Apparent specific gravity} = w/5 \times 5 \times t \times 10000 \qquad (2)$$

(6) Intrinsic viscosity

200 mg of a film sample was dissolved in 20 mL of a solvent mixture of phenol : tetrachloroethane (50:50 by mass ratio), at 110°C for 1 hour. The intrinsic viscosity of the resulting solution was determined at 30°C by the use of Ostwald viscometer.

(7) Washi paper-like appearance

Appearance of a film obtained was evaluated by visual examination and classified according to the criteria below.

○: having an appearance like Washi paper
×: not having an appearance like Washi paper

(8) Solvent bonding property

A film sample was slit into a narrow film with a predetermined width, which was then converted into a tubular film by continuously bonding the both sides thereof overlapped with 1,3-dioxolane in a center seal machine, was flattened and rewound. Then, the tubular film was cut in the direction orthogonal to the bonding direction, yielding a circular sample. The circular sample was cut open and the flat film test piece was obtained. The flat film test piece was stretched and a peeling strength of the solvent bonded portion was determined. The solvent bonding strength was classified according to the following criteria.

○: Strong bonding
Δ: Weak bonding
×: No bonding

The following polyesters are used in EXAMPLES below.

Polyester A (pes A): Polyethylene terephthalate (Intrinsic viscosity (IV) 0.75 dL/g)
Polyester B (pes B): Polyester consisting of 70 mole % of ethylene glycol, 30 mole % of neopentyl glycol, and terephthalic acid (IV 0.72 dL/g)
Polyester C (pes C): Polybutylene terephthalate (IV 1.20 dL/g)

EXAMPLE 1

A polyester resin containing 18 weight % of polyester A, 67 weight % of polyester B, and 15 weight % of polymethylpentene ("TPX DX845" manufactured by Mitsui Chemicals) was melted at 280°C, extruded from a T die into a film, which was rapidly chilled by chill rolls to give an undrawn film. The undrawn film was preheated up to a film temperature of 80°C, and then drawn 4 times at 76°C in the traverse direction in a tenter to give a heat-shrinkable polyester film having a thickness of 80 μm.

EXAMPLE 2

A polyester resin containing 17 weight % of polyester A, 58 weight % of polyester B, 10 weight % of polyester C, and 15 weight % of polymethylpentene ("TPX DX845" manufactured by Mitsui Chemicals) was melted at 280°C, extruded from a T die into a film, which was rapidly chilled by chill rolls to give an undrawn film. The undrawn film was treated in a similar manner to EXAMPLE 1 to give a heat-shrinkable polyester film having a thickness of 80 μm.

EXAMPLE 3

A polyester resin used as two outer surface layers of a three-layered film, containing 18 weight % of polyester A, 67 weight % of polyester B, and 15 weight % of polymethylpentene ("TPX DX845"), and another polyester resin used as an internal layer of the three-layered film, containing 20 weight % of polyester A, 85 weight % of polyester B, and 5 weight % of polymethylpentene ("TPX DX845"), were melted respectively at 280°C, and coextruded from a T die at a ratio of the outer to internal layer of 1:1 into a three-layered film, which was rapidly chilled by chill rolls to give an undrawn three-layered film. The three-layered undrawn film was treated in a similar manner to EXAMPLE 1 to give a three-layered heat-shrinkable polyester film having a thickness of 80 μm.

EXAMPLE 4

A polyester resin used as two outer surface layers of a three-layered film, containing 17 % of polyester A, 63 weight % of polyester B, and 20 weight % of polymethylpentene ("TPX DX845"), and another polyester resin used as an internal layer of the three-layered film, containing 20 weight % of polyester A, 75 weight % of polyester B, and 5 weight % of polymethylpentene ("TPX DX845") were melted, respectively, at 280°C, and coextruded from a T die at a ratio of the outer to internal layer of 1:1 into a three-layered film, which was rapidly chilled by chill rolls to give an undrawn three-layered film. The three-layered undrawn film was treated in a similar manner to EXAMPLE 1 to give a three-layered heat-shrinkable polyester film having a thickness of 80 μm.

COMPARATIVE EXAMPLE 1

A polyester resin containing 32 weight % of polyester A, 63 weight % of polyester B, and 5 weight % of polymethylpentene ("TPX DX845") was melted at 280°C, extruded from a T die into a film, which was rapidly chilled by chill rolls to give an undrawn film. The undrawn film was treated in a similar manner to EXAMPLE 1 to give a heat-shrinkable polyester film having a thickness of 50 μm.

COMPARATIVE EXAMPLE 2

A polyester resin containing 17 weight % of polyester A, 53 weight % of polyester B, 10 weight % of polyester C, and 20 weight % of polystyrene ("G797N", manufactured by Japan Polystyrene) was melted at 280°C, extruded from a T die into an film, which was rapidly chilled by chill rolls to give an undrawn film. The undrawn film was treated in a similar manner to EXAMPLE 1 to give a heat-shrinkable polyester film having a thickness of 50 μm.

COMPARATIVE EXAMPLE 3

A polyester resin containing 17 weight % of polyester A, 53 weight % of polyester B, 10 weight % of polyester C, and 20 weight % of polypropylene ("Grand Polypro F102WC", manufactured by Grand Polymer) was melted at 280°C, extruded from a T die into a film, which was rapidly chilled by chill rolls to give an undrawn film. The undrawn film was treated in a similar manner to EXAMPLE 1 to give a heat-shrinkable polyester film having a thickness of 50 μm.

COMPARATIVE EXAMPLE 4

A polyester resin containing 32 weight % of polyester A, 53 weight % of polyester B, 10 weight % of polyester C, and 5 weight % of polymethylpentene ("TPX DX845") was melted at 280°C, extruded from a T die into a film, which was rapidly chilled by chill rolls to give an undrawn film. The undrawn film was treated in a similar manner to EXAMPLE 1 to give a heat-shrinkable polyester film having a thickness of 50 μm.
The results of evaluation of the film obtained in EXAMPLES 1 to 4 and COMPARATIVE EXAMPLES 1 to 4 are summarized in TABLE 1.

TABLE 1

| | Film type | | Polyester composition (wt %) | | | | | | Drawing condition | | Heat shrinkage percentage at 85°C | | Variation in thickness (μm) | Average void diameter (μm) | | Apparent specific gravity | Product appearance (Test 1) | Washi-like appearance |
|---|---|---|---|---|---|---|---|---|---|---|---|---|---|---|---|---|---|---|
| | | | pes A | pes B | pes C | PMP | PS | PP | Ratio (times) | Temperature (°C) | Traverse direction | Vertical direction | | Surface layer | Internal layer | | | |
| EXAMPLE 1 | Single | | 18 | 67 | · | 15 | · | · | 4.0 | 76 | 48 | 3 | 15 | 1 | 30 | 0.84 | O | O |
| EXAMPLE 2 | Single | | 17 | 58 | 10 | 15 | · | · | 4.0 | 76 | 49 | ·1 | 12 | 1 | 28 | 0.86 | O | ·O |
| EXAMPLE 3 | Lami-nate | Both surface layers | 18 | 67 | · | 15 | · | · | 4.0 | 76 | 53 | 2 | 13 | 1 | 25 | 0.86 | O | O |
| | | Internal layer | 20 | 75 | · | 5 | · | · | | | | | | | | | | |
| EXAMPLE 4 | Lami-nate | Both surface layers | 17 | 63 | · | 20 | · | · | 4.0 | 76 | 51 | 3 | 16 | 1 | 25 | 0.75 | O | O |
| | | Internal layer | 20 | 75 | · | 5 | · | · | | | | | | | | | | |
| COMP. EXAMPLE 1 | Single | | 32 | 63 | · | 5 | · | · | 4.0 | 76 | 46 | 0 | 2 | 1 | 12 | 1.21 | O | × |
| COMP. EXAMPLE 2 | Single | | 17 | 53 | 10 | · | 20 | · | 4.0 | 76 | ·54 | ·1 | 3 | 1 | 12 | 0.95 | O | ×· |
| COMP. EXAMPLE 3 | Single | | 17 | 53 | 10 | · | · | 20 | 4.0 | 76 | 45 | 1 | 3 | 1 | 3 | 0.98 | O | × |
| COMP. EXAMPLE 4 | Single | | 32 | 53 | 10 | 5 | · | · | 4.0 | 76 | 48 | 0 | 2 | 1 | 10 | 1.22 | O | × |

pes A: TPA//EG=100//100 (mole %)

pes B: TPA//EG/NPG=100//70/30 (mole %)

pes C: TPA//BD=100//100 (mole %)

PMP: polymethylpentene

PS: polystyrene

PP: polypropylene

EP 1 340 609 B1

EXAMPLE 5

A polyester resin containing 5 weight % of polyester A, 80 weight % of polyester B, and 15 weight % of polymethylpentene ("TPX DX845") was melted at 280°C, extruded from a T die into a film, which was rapidly chilled by chill rolls to give an undrawn film. The undrawn film was preheated up to a film temperature of 80°C, and then drawn 4 times at 76°C in the traverse direction in a tenter to give a heat-shrinkable polyester film having a thickness of 80 μm.

EXAMPLE 6

A polyester resin containing 8 weight % of polyester A, 75 weight % of polyester B, and 17 weight % of polymethylpentene ("TPX DX845") was melted at 280°C, extruded from a T die into a film, which was rapidly chilled by chill rolls to give an undrawn film. The undrawn film was treated in a similar manner to EXAMPLE 5 to give a heat-shrinkable polyester film having a thickness of 80 μm.

EXAMPLE 7

A polyester resin used as two outer surface layers of a three-layered film, containing 5 weight % of polyester A, 80 weight % of polyester B, and 15 weight % of polymethylpentene ("TPX DX845"), and another polyester resin used as an internal layer of a three-layered film, containing 20 weight % of polyester A, 75 weight % of polyester B, and 5 weight % of polymethylpentene ("TPX DX845") were melted respectively at 280°C, and coextruded from a T die at a ratio of the outer to internal layer of 1:1 into a three-layered film, which was rapidly chilled by chill rolls to give an undrawn three-layered film. The three-layered undrawn film was treated in a similar manner to EXAMPLE 5 to give a three-layered heat-shrinkable polyester film having a thickness of 80 μm.

EXAMPLE 8

A polyester resin used as two outer surface layers of a three-layered film, containing 8 weight % of polyester A, 75 weight % of polyester B, and 17 weight % of polymethylpentene ("TPX DX845" manufactured by Mitsui Chemicals), and another polyester resin used as an internal layer of a three-layered film, containing 20 weight % of polyester A, 75 weight % of polyester B, and 5 weight % of polymethylpentene ("TPX DX845") were melted respectively at 280°C, and coextruded from a T die at a ratio of the outer and internal layer of 1:1 into a three-layered film, which was rapidly chilled by chill rolls to give an undrawn three-layered film. The three-layered undrawn film was treated in a similar manner to EXAMPLE 5 to give a three-layered heat-shrinkable polyester film having a thickness of 80 μm.

COMPARATIVE EXAMPLE 5

A polyester resin containing 42 weight % of polyester A, 53 weight % of polyester B, and 5 weight % of polymethylpentene ("TPX DX845") was melted at 280°C, extruded from a T die into a film, which was rapidly chilled by chill rolls to give an undrawn film. The undrawn film was treated in a similar manner to EXAMPLE 5 to give a heat-shrinkable polyester film having a thickness of 50 μm.

The results of evaluation of the films obtained in EXAMPLES 5 to 8 and COMPARATIVE EXAMPLE 5 are summarized in TABLE 2.

TABLE 2.

| | Film type | | Polyester composition (wt %) | | | | | | Drawing condition | | Heat shrinkage percentage at 85°C | | Variation in thickness (μm) | Average void diameter (μm) | | Apparent specific gravity | Product appearance (Test 2) | Washi-like appearance | Solvent bonding property |
|---|---|---|---|---|---|---|---|---|---|---|---|---|---|---|---|---|---|---|---|
| | | | pes A | pes B | pes C | PMP | PS | PP | Ratio (times) | Temperature (°C) | Traverse direction | Vertical direction | | Surface layer | Internal layer | | | | |
| EXAMPLE 5 | Single | | 5 | 80 | - | 15 | - | - | 4.0 | 76 | 60 | 0 | 8 | 1 | 30 | 0.85 | O | O | O |
| EXAMPLE 6 | Single | | 8 | 76 | - | 17 | - | - | 4.0 | 76 | 58 | 0 | 10 | 1 | 28 | 0.83 | O | O | O |
| EXAMPLE 7 | Laminate | Both surface layers | 5 | 80 | - | 15 | - | - | 4.0 | 76 | 56 | 2 | 8 | 1 | 25 | 0.87 | O | O | O |
| | | Internal layer | 20 | 75 | - | 5 | - | - | | | | | | | | | | | |
| EXAMPLE 8 | Laminate | Both surface layers | 8 | 75 | - | 17 | - | - | 4.0 | 76 | 55 | 3 | 9 | 1 | 25 | 0.86 | O | O | O |
| | | Internal layer | 20 | 75 | - | 5 | - | - | | | | | | | | | | | |
| COMP. EXAMPLE 5 | Single | | 42 | 53 | - | 5 | - | - | 4.0 | 76 | 43 | 2 | 8 | 1 | 12 | 1.23 | O | × | Δ |

pes A: TPA//EG=100//100 (mole %)
pes B: TPA//EG/NPG=100//70/30 (mole %)
pes C: TPA//BD=100//100 (mole %)
PMP: polymethylpentene
PS: polystyrene
PP: polypropylene

EP 1 340 609 B1

As is apparent in TABLES 1 and 2, the films obtained in EXAMPLES 1 to 8 have an excellent product appearance after heat shrinkage and an appearance like Washi paper, and thus heat-shrinkable polyester films of the present invention are superior both in quality and practicality and particularly suited as a shrinkable label for use in the field where Washi-like appearance is demanded.

In contrast, heat-shrinkable films obtained in COMPARATIVE EXAMPLES 1 to 5 have surfaces relatively smooth and do not have the appearance like Washi paper. Accordingly, heat-shrinkable polyester films obtained in COMPARATIVE EXAMPLES were all inferior in quality and practicality.

The present invention provides a heat-shrinkable polyester film suitable for use as a label for shrink-wrapping of bottles, especially as a label for use in the field where an appearance like Washi paper is demanded.

A heat-shrinkable polyester film of the present invention provides a heat-shrinkable label for bottles that has an excellent label heat shrinkage property and is almost free from problems such as crinkling, shrinkage shading, and deformation due to heat shrinkage, or insufficient shrinkage, and that is quite useful for use in the field where Washi paper-like appearance is demanded.

## Claims

1. A heat-shrinkable polyester film having a variation in film thickness of 3 μm or more per cm both in a maximum shrinkage direction and in a direction orthogonal to the maximum shrinkage direction, the film comprising a layer having voids with an average void diameter of 15 μm or more in vicinity of a center part in a film thickness direction and at least one surface layer having voids with an average void diameter of less than 5 μm.

2. A heat-shrinkable polyester film according to Claim 1, wherein the variations in film thickness both in the maximum shrinkage direction and in the direction orthogonal thereto are 5 μm or more per cm.

3. A heat-shrinkable polyester film according to Claim 1 or 2, wherein a polyester constituting the polyester film contains at least 17 mole % of an amorphous monomer diol component with respect to the sum of all diol components.

4. A heat-shrinkable polyester film according to Claim 3, wherein the amorphous monomer diol component is neopentyl glycol.

5. A heat-shrinkable polyester film according to Claim 1, 2, 3, or 4, wherein the film has an apparent specific gravity of less than 1.0.

6. A heat-shrinkable polyester film according to Claim 1, 2, 3, 4, or 5, wherein heat shrinkage percentage of the film in the maximum shrinkage direction after treatment in hot water at 85°C for 10 seconds and in water at 25°C for 10 seconds in this order is 30 % or more, and the heat shrinkage percentage in the direction orthogonal to the maximum shrinkage direction after treatment in hot water in the 85°C for 10 seconds and in water at 25°C for 10 seconds in this order is 10 % or less.

7. A heat-shrinkable polyester film according to Claim 1, 2, 3, 4, 5 or 6, wherein the film comprises a polyester resin containing a thermoplastic resin not miscible therewith.

8. A label producible by using the heat-shrinkable polyester film according to Claim 1, 2, 3, 4, 5, 6, or 7.

## Patentansprüche

1. Wärmeschrumpfbare Polyesterfolie, die eine Variation der Foliendicke von 3 μm oder mehr pro cm sowohl in der maximalen Schrumpfungsrichtung als auch in einer Richtung rechtwinklig zur maximalen Schrumpfungsrichtung hat, wobei die Folie Folgendes umfasst: eine Schicht, die Hohlräume mit einem durchschnittlichen Hohlraum-Durchmesser von 15 μm oder mehr in der Nähe eines mittleren Teils in der Foliendickenrichtung hat, und wenigstens eine Oberflächenschicht, die Hohlräume mit einem durchschnittlichen Hohlraum-Durchmesser von weniger als 5 μm hat.

2. Wärmeschrumpfbare Polyesterfolie gemäß Anspruch 1, wobei die Variationen der Foliendicke sowohl in der maximalen Schrumpfungsrichtung als auch in einer Richtung rechtwinklig dazu 5 μm oder mehr pro cm betragen.

3. Wärmeschrumpfbare Polyesterfolie gemäß den Ansprüchen 1 oder 2, wobei ein Polyester, der die Polyesterfolie ausmacht, wenigstens 17 Mol-% einer amorphen Monomerdiol-Komponente, bezogen auf die Summe aller Diol-Komponenten, enthält.

4. Wärmeschrumpfbare Polyesterfolie gemäß Anspruch 3, wobei die amorphe Monomerdiol-Komponente Neopentylglycol ist.

5. Wärmeschrumpfbare Polyesterfolie gemäß den Ansprüchen 1, 2, 3 oder 4, wobei die Folie ein scheinbares spezifisches Gewicht von weniger als 1,0 hat.

6. Wärmeschrumpfbare Polyesterfolie gemäß den Ansprüchen 1, 2, 3, 4 oder 5, wobei der Wärmeschrumpfungs-Prozentwert der Folie in der maximalen Schrumpfungsrichtung nach der Behandlung in heißem Wasser bei 85 °C während einer Zeitspanne von 10 Sekunden und in Wasser bei 25 °C während einer Zeitspanne von 10 Sekunden in dieser Reihenfolge 30 % oder mehr beträgt, und der Wärmeschrumpfungs-Prozentwert in der Richtung rechtwinklig zur maximalen Schrumpfungsrichtung nach der Behandlung in heißem Wasser bei 85 °C während einer Zeitspanne von 10 Sekunden und in Wasser bei 25 °C während einer Zeitspanne von 10 Sekunden in dieser Reihenfolge 10 % oder weniger beträgt.

7. Wärmeschrumpfbare Polyesterfolie gemäß den Ansprüchen 1, 2, 3, 4, 5 oder 6, wobei die Folie ein Polyesterharz umfasst, das ein thermoplastisches Harz enthält, welches nicht damit mischbar ist.

8. Etikett, das unter Verwendung der wärmeschrumpfbaren Polyesterfolie gemäß den Ansprüchen 1, 2, 3, 4, 5, 6 oder 7 herstellbar ist.

**Revendications**

1. Feuille en polyester thermorétractable présentant une variation dans l'épaisseur de la feuille de 3 µm ou plus par cm à la fois dans une direction de retrait maximum et dans une direction orthogonale par rapport à une direction de retrait maximale, la feuille comprenant une couche ayant des vides avec un diamètre de vide moyen de 15 µm ou plus à proximité d'une partie centrale dans une direction d'épaisseur de la feuille et au moins une couche en surface ayant des vides avec un diamètre de vide moyen inférieur à 5 µm.

2. Feuille en polyester thermorétractable selon la revendication 1, dans laquelle des variations dans l'épaisseur de la feuille à la fois dans une direction de retrait maximum et dans une direction orthogonale par rapport à celle-ci sont de 5 µm ou plus par cm.

3. Feuille en polyester thermorétractable selon la revendication 1 ou 2, dans laquelle le polyester constituant la feuille en polyester contient au moins 17 % molaires d'un composant de diol monomère amorphe par rapport à la somme de l'ensemble des composants de diol.

4. Feuille en polyester thermorétractable selon la revendication 3, dans laquelle le composant de diol monomère amorphe est du néopentyl glycol.

5. Feuille en polyester thermorétractable selon la revendication 1, 2, 3, ou 4, dans laquelle la feuille présente une densité apparente d'au moins 1,0.

6. Feuille en polyester thermorétractable selon la revendication 1, 2, 3, 4, ou 5, dans laquelle le pourcentage thermorétractable de la feuille dans la direction de retrait maximum après traitement à l'eau chaude à 85°C durant 10 secondes et dans de l'eau à 25°C durant 10 secondes dans cet ordre est de 30 % ou plus, et le pourcentage thermorétractable dans la direction orthogonale par rapport à la direction thermorétractable maximum après traitement à l'eau chaude à 85°C durant 10 secondes et dans de l'eau à 25°C durant 10 secondes dans cet ordre est de 10 % ou moins.

7. Feuille en polyester thermorétractable selon la revendication 1, 2, 3, 4, 5, ou 6, dans laquelle la feuille comprend une résine en polyester contenant une résine thermoplastique non miscible avec celle-ci.

8. Etiquette pouvant être produite en utilisant une feuille en polyester thermorétractable selon la revendication 1, 2, 3, 4, 5, 6, ou 7.